# DEMANDE DE BREVET EUROPEEN

(11) **EP 1 213 872 A2**
(43) Date de publication de la demande: **12.06.2002**
(21) Numéro de dépôt: 01204602.5
(22) Date de dépôt: 29.11.2001
(51) Int. Cl.: H04L 7/033

(54) **Récupération d'un paquet dans un système de transmissions par paquets avec voie de retour**

(30) Priorité: 05.12.2000 FR 0015754
(71) Demandeur: Koninklijke Philips Electronics N.V., 5621 BA Eindhoven (NL)
(72) Inventeur: Brajal, Américo, c/o Société Civile S.P.I.D., 75008 Paris (FR); Legrand, Delphine, c/o Société Civile S.P.I.D., 75008 Paris (FR); Chouly, Antoine, c/o Société Civile S.P.I.D., 75008 Paris (FR)
(74) Mandataire: Chaffraix, Jean

(57) **Abrégé**

L'invention concerne un système de transmissions interactif par paquets TDMA avec voie de retour entre des terminaux et une tête de réseau. L'invention propose une méthode pour récupérer le premier paquet émis par un terminal pour se connecter au système, selon laquelle les données émises sont recherchées en effectuant des corrélations successives sur des fenêtres glissantes le long du paquet reçu en utilisant un préambule connu. Les calculs de corrélation sont effectués uniquement sur les sur-échantillons optimaux, l'estimation de l'instant d'échantillonnage initial étant effectué au préalable sur chaque fenêtre considérée.

Application: systèmes de transmission par paquets TDMA avec voie de retour, standard DVB-RCS.

## Description

L'invention concerne un récepteur pour système de transmission par paquets de type TDMA comprenant au moins un terminal susceptible d'émettre à destination du récepteur, dans un intervalle de temps alloué selon un plan d'allocation prédéterminé, un paquet de symboles, dit paquet émis, contenant une partie utile et un préambule connu, le récepteur comportant :
- des moyens de réception pour recevoir un paquet de symboles, dits symboles reçus, correspondant à l'intervalle de temps alloué,
- des moyens de sur-échantillonnage pour générer des sur-échantillons (S₀ à S_{M-1}) à partir d'un symbole reçu et
- des moyens de récupération dudit paquet émis pour retrouver la position du paquet émis dans l'intervalle de temps alloué.

Elle concerne également un système de transmissions par paquets comportant un tel récepteur.

L'invention concerne aussi un procédé de réception pour déterminer la position d'un paquet de symboles, dit paquet émis, comprenant des données utiles et un préambule connu, émis par un terminal d'un système de transmission par paquets de type TDMA, à l'intérieur d'un intervalle de temps alloué selon un plan d'allocation prédéterminé, le procédé comportant les étapes suivantes :
- une étape de réception pour recevoir un paquet, dit paquet reçu, correspondant à l'intervalle de temps alloué et contenant des symboles, dits symboles reçus, dont le paquet émis,
- une étape de sur-échantillonnage pour générer des sur-échantillons à partir desdits symboles reçus,
- une étape de décalage pour sélectionner une fenêtre de calcul glissante sur le paquet reçu,
- une étape de recherche de l'instant d'échantillonnage optimal pour sélectionner, à partir des sur-échantillons générés, les sur-échantillons optimaux correspondants aux symboles reçus contenus dans la fenêtre courante et
- une étape de corrélations successives sur la fenêtre courante entre les sur-échantillons sélectionnés et le préambule connu du paquet émis et
- une étape de décision pour détecter la présence du paquet émis dans une fenêtre de calcul et pour en déduire sa position à l'intérieur de l'intervalle de temps alloué.

L'invention concerne enfin un programme d'ordinateur comprenant des instructions prévues pour mettre en oeuvre le procédé ci-dessus ainsi qu'un signal capable de transmettre ces instructions en vue de leur mise en oeuvre.

L'invention a d'importantes applications dans le domaine des transmissions par satellite ou par câble et notamment dans les transmissions avec voie de retour, dans lesquelles une pluralité de terminaux sont susceptibles de transmettre des paquets de données vers une tête de réseau selon un mécanisme de répartition des ressources en temps. Elle concerne en particulier des systèmes compatibles avec une norme du type DVB-RCS (en anglais Digital Video Broadcasting Return Channel via Satellite), comme la recommandation publiée sous la référence « DVB blue book A54 rev.1 » ainsi que des systèmes selon la recommandation de l'ETSI (de l'anglais European telecommunications Standards Institute) actuellement encore en phase d'approbation sous la référence « Draft ETSI EN 301 790 V. 1.2.1 » dans sa version de juillet 2000.

Dans les systèmes interactifs par satellite, plusieurs terminaux sont susceptibles d'émettre des signaux à destination d'un même récepteur, appelé tête de réseau, en utilisant une liaison dite montante ou encore voie de retour. Selon les modes d'allocation et de répartition des ressources utilisés sur la voie de retour, la récupération au niveau du récepteur / tête de réseau, des données émises par les différents terminaux pose différents problèmes. Dans l'exemple des systèmes à répartition temporelle selon le standard DVB-RCS déjà cité, l'entrée d'un nouveau terminal dans le système se fait par l'émission d'un premier paquet de données, appelé CSC (de l'anglais Common Signalling Channel), sur la voie montante dans un intervalle de temps alloué à cet effet selon un plan d'allocation prédéterminé. Mais compte tenu des nombreuses erreurs en temps, en fréquence et en puissance qui peuvent intervenir durant la transmission, il existe une probabilité non négligeable que le paquet ne soit pas transmis exactement dans l'intervalle de temps prévu initialement. Pour éviter que ce paquet soit perdu, les intervalles de temps alloués sur la voie de retour sont munis d'intervalles de garde importants pour garantir une marge d'erreur suffisante lors de la transmission du paquet. En réception, il est nécessaire de retrouver la position exacte du paquet émis à l'intérieur de l'intervalle de temps pour en récupérer les données utiles. La récupération correcte de ce premier paquet est d'autant plus nécessaire qu'elle conditionne l'établissement de la connexion du terminal au réseau.

L'invention a notamment pour but de permettre de récupérer très rapidement et avec une faible complexité de calculs les premiers paquets émis par un terminal lors de l'établissement de sa connexion avec la tête de réseau du système.

Pour cela, l'invention prévoit un récepteur tel que décrit dans le paragraphe introductif, remarquable en ce que lesdits moyens de récupération comportent :
- des moyens de décalage pour sélectionner une fenêtre de calcul glissante sur l'intervalle de temps alloué,
- des moyens de recherche de l'instant d'échantillonnage optimal pour déterminer, à partir des sur-échantillons générés, les sur-échantillons optimaux correspondant aux symboles reçus contenus dans la fenêtre de calcul courante,
- des moyens de corrélation pour corréler successivement sur la fenêtre de calcul courante, les sur-échantillons optimaux avec le préambule connu du paquet émis et
- des moyens de décision pour détecter la présence et la position du paquet émis dans l'une des fenêtres de calcul en fonction du résultat des corrélations successives.

L'invention sera mieux comprise et d'autres détails apparaîtront dans la description qui va suivre en regard des dessins annexés qui sont donnés à titre d'exemples non limitatifs et dans lesquels:
- la figure 1 est un schéma d'un exemple de système de transmission selon l'invention,
- la figure 2 est un schéma général d'un exemple de réalisation d'un récepteur selon l'invention,
- la figure 3 est un diagramme illustrant un mode de réalisation de l'invention,
- la figure 4 est un organigramme représentant un exemple de procédé selon l'invention.

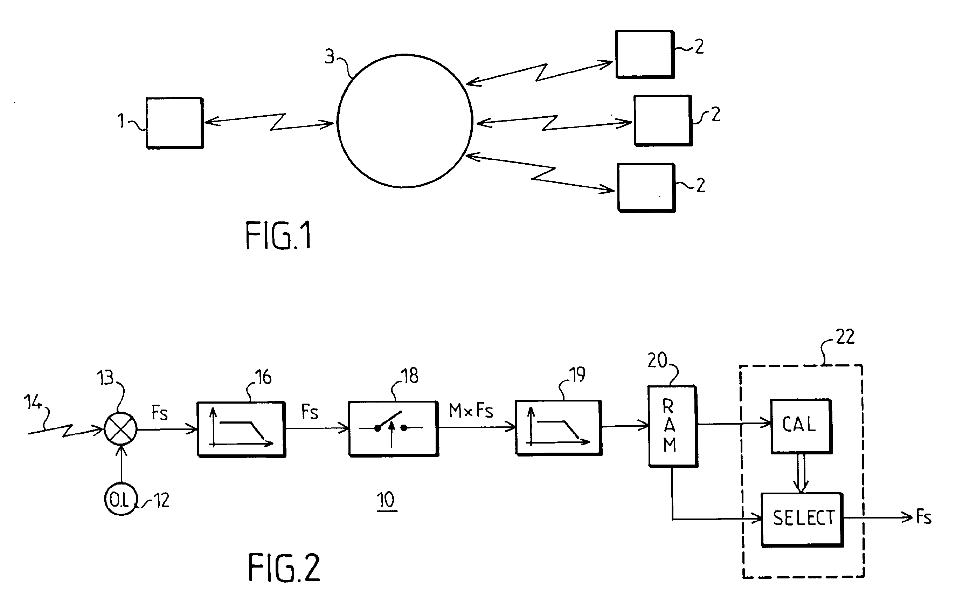

Un système de transmission selon l'invention est représenté à titre d'exemple sur la figure 1. Il comporte une tête de réseau 1 et une pluralité de terminaux interactifs 2 susceptibles d'émettre et de recevoir des données vers et en provenance de la tête de réseau en utilisant un média de transmission 3. Le média de transmission 3 peut être de différentes natures : câble, faisceau hertzien, liaison par satellite, etc. Les transmissions des terminaux vers la tête de réseau sont qualifiées de transmissions montantes ou voie de retour. Les transmissions de la tête de réseau vers les terminaux sont qualifiées de transmissions descendantes. Dans les transmissions montantes, la tête de réseau 1 a la fonction d'un récepteur. Dans les transmissions descendantes chaque terminal 2 a la fonction d'un récepteur. L'accès des terminaux au média de transmission se fait par exemple en utilisant un mécanisme d'accès multiple à répartition temporelle TDMA (Time Division Multiple Access en anglais) éventuellement combiné à une répartition en fréquence FDMA (Frequency Division Multiple Access en anglais).

Dans un système de transmissions par paquets à répartition temporelle, des paquets de données ou symboles peuvent être émis dans des intervalles de temps consécutifs, alloués selon un plan d'allocation prédéterminé, par des terminaux différents à destination d'un même récepteur, appelé notamment tête de réseau dans les systèmes de transmissions interactifs. Du fait que ces paquets proviennent de terminaux différents et que leur position n'est pas toujours connue précisément, il existe une incertitude temporelle, fréquentielle et quant au niveau de puissance des paquets reçus par la tête de réseau en provenance de ces terminaux. Un problème particulier se pose sur les premiers paquets émis par un terminal pour entrer dans le système. En effet, les erreurs en réception sur ces premiers paquets sont très sensibles, surtout dans les systèmes de transmission par satellite, car la position des terminaux n'est pas connue avec suffisamment de précision par la tête de réseau. Il est pourtant indispensable de tenter de récupérer le premier paquet émis qui conditionne l'établissement d'une connexion du terminal au système. Cette récupération suppose de déterminer exactement la position du paquet dans l'intervalle de temps alloué qui comporte des intervalles de garde importants pour justement augmenter la probabilité que le paquet émis se trouve bien à l'intérieur de l'intervalle.

Les différent terminaux ayant des instants d'échantillonnage différents du fait que leurs horloges d'émission ne sont pas synchrones, il faudra également pour chaque paquet reçu déterminer l'instant d'échantillonnage optimal correspondant aux paquets émis. De plus, ces horloges étant susceptibles de présenter une certaine gigue, deux paquets successifs émis par un même terminal émetteur n'ont donc pas forcément le même instant d'échantillonnage optimal. Par ailleurs, des distorsions dans le canal peuvent provoquer un décalage à l'arrivée. Pour déterminer la position du paquet reçu, la tête de réseau ou le récepteur (qui peut être un autre terminal dans le cas d'un système point-à-point) doit donc effectuer un sur-échantillonnage des données reçues. Le sur-échantillonnage revient à utiliser une horloge multiple de la fréquence d'échantillonnage théorique, pour retrouver l'instant d'échantillonnage utilisé à l'émission pour émettre les paquets. Par exemple, la fréquence de sur-échantillonnage peut être 16 fois supérieure à la fréquence symbole, ce qui revient à extraire 16 échantillons pendant la durée d'un symbole reçu, un seul de ces échantillons étant optimal, c'est-à-dire placé à proximité de l'instant où débute le symbole émis.

Un schéma général simplifié d'un récepteur 10 selon l'invention est représenté sur la figure 2. Le récepteur comporte un oscillateur local 12 et un mélangeur 13 pour transposer le signal reçu 14 à la fréquence symbole F_{S} de telle sorte que le spectre du signal transposé soit centré sur zéro plus ou moins une erreur en fréquence du fait que les oscillateurs locaux utilisés pour émettre sur les fréquences porteuses ne sont pas parfaits. Le signal transposé est alors filtré par un filtre de réjection 16 pour éliminer les fréquences images autour de 2Fp, où Fp est la fréquence porteuse d'émission, ainsi que les autres porteuses utilisées dans le système. Le signal obtenu en sortie du filtre de réjection 16 est échantillonné par un dispositif de sur-échantillonnage 18 de facteur M entier, destiné à générer M sur-échantillons, notés S₀ à S_{M-1} pour chaque symbole du signal transposé. Selon l'invention, les sur-échantillons sont générés à la fréquence M×F_{S} avec M≥3.

Les sur-échantillons sont ensuite filtrés à l'aide d'un filtre passe-bas 19 destiné à filtrer les échantillons sur une durée D×Ts où D est le nombre de symboles contenus dans un paquet et où T_{S} est la durée d'un symbole. Les échantillons fournis en sortie du filtre 19 sont stockés dans une mémoire 20, notée RAM sur la figure 2, en vue d'être traités par un dispositif de récupération du paquet initial 22, destiné à retrouver l'instant d'échantillonnage optimal correspondant au paquet émis ainsi que la position du paquet émis par le terminal à l'intérieur du paquet reçu correspondant à l'intervalle de temps alloué pour transmettre les données du terminal. Le nombre d'échantillons stockés dans la mémoire 20 est égal à D×M où M est le nombre de sur-échantillons par symbole. Ils correspondent à une durée égale à DxTₛ.

Le dispositif de récupération du paquet initial 22 comporte un organe de calcul CAL et un organe de décalage SELECT. L'organe de calcul CAL est prévu pour calculer l'instant d'échantillonnage optimal et pour effectuer des calculs de corrélation avec un préambule de données connues, destinés à retrouver la position du premier paquet émis par le terminal dans le paquet reçu correspondant à l'intervalle de temps alloué. L'organe de décalage SELECT est prévu pour effectuer des décalages sur les données stockées en mémoire 20, ce qui revient à sélectionner une fenêtre de calcul glissante sur les données reçues afin que l'organe de calcul CAL puisse déterminer le sur-échantillon optimal sur chaque fenêtre, avant d'entreprendre les calculs de corrélation pour retrouver la position du préambule du paquet recherché. En sortie du sélecteur SELECT, les données sont à la fréquence symbole Fₛ. Il reste encore, pour le récepteur, à effectuer l'estimation de l'erreur en fréquence et en phase ainsi que le décodage des données reçues. Ces étapes étant indépendantes de l'invention, elles ne sont pas détaillées ici.

Cet exemple permet de traiter le cas où un seul paquet est émis par un terminal dans chaque intervalle de temps prévu par le plan d'allocation déterminé par la tête de réseau. Dans les autres cas détaillés plus loin où aucun ou au contraire plusieurs paquets sont émis dans un même intervalle de temps, de légères modifications dans les algorithmes devront être prévues qui ne modifient en rien le principe décrit ci-dessus, notamment au niveau des interactions entre l'organe de sélection SELECT, la mémoire RAM et l'organe de calcul CAL.

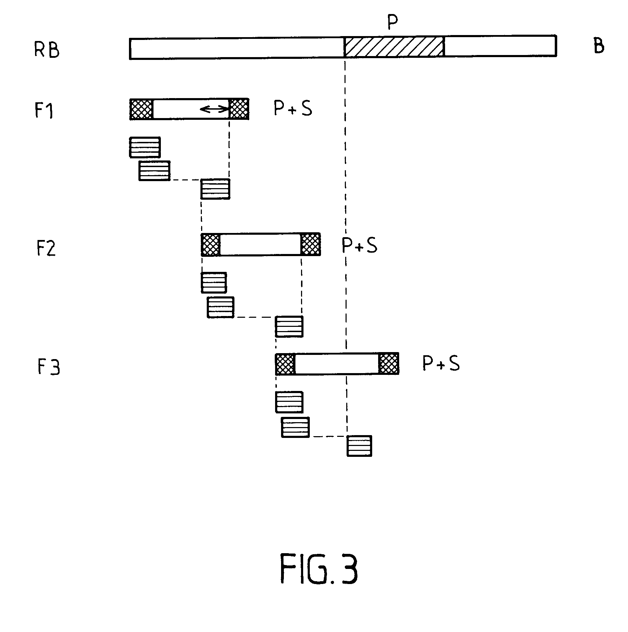

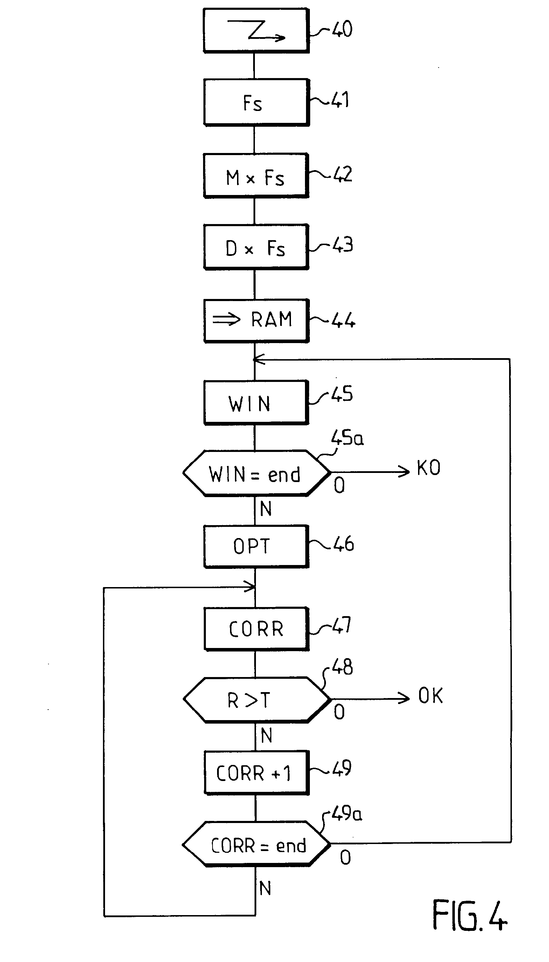

Le fonctionnement d'un exemple de dispositif de récupération du paquet initial 22 est expliqué en détails à l'aide des figures 3 et 4. La figure 3 illustre un exemple d'algorithme pour mettre en oeuvre le procédé de récupération du premier paquet émis à partir du paquet reçu indiqué RB et correspondant à l'intervalle de temps alloué. Cet exemple illustre le cas idéal où un seul paquet a été émis par un terminal dans l'intervalle de temps considéré. En effet, deux autres cas peuvent se produire. La tête de réseau peut recevoir un paquet vide, c'est-à-dire qu'aucun terminal n'a émis de données dans l'intervalle de temps, ou alors recevoir un paquet contenant plus d'un seul paquet émis par au moins 2 terminaux. Ces autres cas nécessitent un traitement particulier qui sera détaillé plus loin.

Le paquet reçu par la tête de réseau selon l'exemple illustré contient un nombre B de symboles dont une partie seulement, contenant P symboles représentés dans un rectangle hachuré, représente le paquet émis par le terminal. Les autres données du paquet reçu (B-P symboles) correspondent à du bruit puisque dans cet exemple, un seul paquet a été émis dans l'intervalle de temps alloué par la tête de réseau. Ces B-P symboles servent notamment à garantir un intervalle de garde suffisant pour permettre une certaine marge d'erreur sur la position du paquet émis par le terminal dans l'intervalle de temps.

Selon l'invention, l'algorithme est d'abord appliqué sur une première fenêtre, notée F1, contenant les P+S premiers symboles du paquet, et suppose que le paquet recherché se trouve effectivement situé dans cette fenêtre. Les S symboles supplémentaires sont destinés à pallier l'ambiguïté inhérente à l'algorithme utilisé pour les calculs de corrélation. L'estimation de l'instant d'échantillonnage optimal avec sélection des sur-échantillons optimaux est représenté par une double flèche sur la figure 3. Elle est effectuée sur les dernières données de la fenêtre sélectionnée, hormis les S derniers symboles, représentés dans un rectangle quadrillé, car c'est l'endroit de la fenêtre où la probabilité de trouver le paquet émis est la plus forte. Ensuite commence la phase de recherche proprement dite par corrélations successives entre le préambule connu du paquet à récupérer et les sur-échantillons optimaux sélectionnés.

Selon une première variante de réalisation de l'invention, dite variante à base de seuil, les calculs de corrélation, représentés par des blocs décalés munis de rayures horizontales, sont réalisés tout au long de la fenêtre F1, en progressant de préférence d'un seul symbole par corrélation, jusqu'à ce qu'un seuil de corrélation fixé, noté T, soit atteint. Lorsque ce seuil T est atteint, le paquet recherché est supposé avoir été trouvé. Si le seuil n'est pas atteint sur la fenêtre F1, une autre fenêtre F2 est sélectionnée sur laquelle les calculs d'un nouvel instant d'échantillonnage optimal ainsi que les calculs de corrélation sont effectués comme pour la première fenêtre, et ainsi de suite jusqu'à retrouver le paquet recherché, en prenant garde de garantir un recouvrement suffisant entre les fenêtres. De préférence, le recouvrement comprend les S symboles additionnés de la taille de l'intervalle de corrélation qui correspond au moins à la taille du préambule du paquet émis. La fiabilité de la variante à base de seuil repose en grande partie sur la définition du seuil T, sachant que le seuil optimal dépend étroitement du rapport signal à bruit et de l'amplitude du signal reçu.

Selon une autre variante de réalisation de l'invention, dite variante du maximum, les calculs de corrélation sont effectués sur toutes les fenêtres et donc sur toute la longueur du paquet reçu, quel que soit le résultat de chaque corrélation, pour ne conserver finalement en mémoire que la position du maximum qui correspond au paquet recherché, ainsi que le sur-échantillon correspondant à la fenêtre où il est situé. Cette variante nécessite cependant de mémoriser les instants d'échantillonnage optimaux correspondant à toutes les fenêtres de calcul. Malgré cela, la variante du maximum reste plus avantageuse que les méthodes connues car les calculs de corrélation sont effectués directement sur les symboles au lieu des sur-échantillons. En effet, l'instant d'échantillonnage optimal ayant déjà été calculé, le meilleur sur-échantillon est alors connu et il suffit d'en déduire le symbole correspondant préalablement mémorisé. Dans l'exemple illustré ici où le facteur de sur-échantillonnage est de 16 sur-échantillons par symbole, la variante du maximum permet néanmoins de réduire le nombre de calculs d'un facteur 16².

Dans un des cas évoqués plus haut où aucun paquet n'a été émis dans l'intervalle de temps prévu, le paquet reçu ne contient que du bruit. Selon la variante à base de seuil et dans l'hypothèse où le seuil a été correctement défini par rapport au bruit du canal, le résultat de chaque corrélation devrait se situer en dessous du seuil fixé pour aboutir à la conclusion qu'aucun paquet n'a été trouvé. En revanche, selon la variante du maximum, un maximum sera forcément obtenu et il faudra attendre le décodage des données du paquet pour s'apercevoir qu'il ne contient aucune donnée valide. Pour éviter cela, il est possible de combiner les deux méthodes, c'est-à-dire déterminer le maximum de toutes les corrélation, tout en prévoyant un seuil minimum au dessous duquel le résultat est détecté non valide.

Dans l'autre cas également évoqué où plusieurs paquets sont émis dans un même intervalle de temps à destination de la tête de réseau, deux situations différentes peuvent encore se produire.

Dans la première, les paquets se chevauchent. Selon l'une ou l'autre variante, la position du premier paquet va être trouvée et il faudra attendre le décodage des données pour s'apercevoir qu'elles ne sont pas valides.

Dans la seconde, les paquets sont disjoints. Selon la variante à base de seuil, un premier seuil va d'abord être détecté indiquant la présence du premier paquet. Ensuite, pour pouvoir détecter les autres paquets, une solution consiste à continuer le procédé décrit plus haut P symboles plus loin, c'est-à-dire en ignorant simplement les P symboles constituant le paquet trouvé. Ainsi, le même procédé pourra être appliqué à tous les paquets contenus dans l'intervalle pour les récupérer tous. Selon la variante du maximum, la méthode devra être appliquée en couches successives, la première couche permettant de détecter le paquet ayant la plus forte puissance et ainsi de suite jusqu'au paquet ayant la puissance la plus faible. Après chaque détection d'un paquet émis, les P symboles qui constituent le paquet détecté sont supprimés où ignorés dans les calculs suivants pour permettre la détection d'un nouveau maximum.

La figure 4 détaille les différentes étapes d'un mode de réalisation préférentiel du procédé décrit à la figure 3, dans le cas idéal où un seul paquet est émis dans un intervalle de temps à destination du récepteur. De légères modifications n'en affectant pas le principe seront nécessaires pour prendre en compte les autres cas cités lorsque aucun ou au contraire plusieurs paquets sont émis dans un même intervalle de temps. Le procédé peut avantageusement être mis en oeuvre à l'aide d'un programme d'ordinateur dans le dispositif portant la référence 22 dans la figure 2. Il comporte les étapes suivantes, représentées par des blocs sur la figure 4 :
- étape 40 : réception d'un paquet de données contenant D symboles,
- étape 41 : conversion du signal reçu à la fréquence symbole Fₛ en bande de base,
- étape 42 : sur-échantillonnage du signal en bande de base pour obtenir M échantillons par symbole, avec M>2,
- étape 43 : filtrage passe-bas des sur-échantillons sur une durée égale à D×T_{S} où D est le nombre de symboles contenus dans un paquet et où Tₛ est la durée d'un symbole,
- étape 44 : stockage en mémoire (RAM) des sur-échantillons filtrés,
- étape 45 : décalage en mémoire sur les données stockées pour sélectionner une fenêtre de calcul (WIN) comprenant P+S symboles contenus dans le paquet reçu ; lors du démarrage du procédé, la première fenêtre est de préférence située au début du paquet reçu (alors WIN=F1),
- étape 45a : un test est effectué pour déterminer si on a atteint la fin du paquet (WIN=end), c'est-à-dire qu'on se trouve moins de P+S symboles avant la fin, dans ce cas, le procédé se termine sans que le paquet recherché ait été trouvé (KO),
- étape 46 : calcul de l'instant d'échantillonnage optimal (OPT) selon une méthode connue quelconque, effectué sur les données situées à la fin de la fenêtre précédemment sélectionnée sauf les derniers S symboles, et sélection du sur-échantillon optimal correspondant à cette fenêtre,
- étape 47 : calcul de corrélation (CORR) avec le préambule connu du paquet émis sur une partie des données de la fenêtre correspondant à la longueur du préambule et en ne tenant compte que des symboles correspondant au sur-échantillon optimal déterminé à l'étape précédente, le calcul commençant au début de la fenêtre de calcul,
- étape 48 : test du résultat R de la corrélation par rapport à un seuil de décision fixé, noté T ; si le résultat est supérieur au seuil fixé (R>T), le paquet a été retrouvé (OK), il ne reste plus qu'à sélectionner dans la mémoire de stockage le sur-échantillon dans la fenêtre préalablement sélectionnée correspondant au paquet trouvé par corrélation, sinon, le procédé se poursuit à l'étape suivante,
- étape 49 : décalage de la position du calcul de corrélation (CORR+1) sur les données suivantes de la fenêtre en ne prenant de préférence qu'au plus un symbole nouveau,
- étape 49a : test pour savoir si la fin de la fenêtre est atteinte (CORR=end), auquel cas, le procédé se poursuit à l'étape 45 par un décalage sur les données de la mémoire pour sélectionner une autre fenêtre ayant un recouvrement avec la fenêtre précédente supérieur aux S derniers symboles, sinon le procédé se poursuit à l'étape 47 pour poursuivre les calculs de corrélation sur toute la longueur de la fenêtre à l'exclusion des derniers S symboles.

## Revendications

1. Récepteur pour système de transmission par paquets de type TDMA comprenant au moins un terminal (2) susceptible d'émettre à destination du récepteur (1), dans un intervalle de temps alloué selon un plan d'allocation prédéterminé, un paquet de symboles, dit paquet émis, contenant une partie utile et un préambule connu, le récepteur comportant :
- des moyens de réception (13) pour recevoir un paquet de symboles, dits symboles reçus, correspondant à l'intervalle de temps alloué,
- des moyens de sur-échantillonnage (18) pour générer des sur-échantillons (S₀ à S_{M-1}) à partir d'un symbole reçu et
- des moyens de récupération dudit paquet émis (22) pour retrouver la position du paquet émis dans l'intervalle de temps alloué, comprenant :
- des moyens de décalage (SELECT) pour sélectionner une fenêtre de calcul glissante sur l'intervalle de temps alloué,
- des moyens de recherche de l'instant d'échantillonnage optimal (CAL) pour déterminer, à partir des sur-échantillons générés, les sur-échantillons optimaux correspondant aux symboles reçus contenus dans la fenêtre de calcul courante,
- des moyens de corrélation (CAL) pour corréler successivement sur la fenêtre de calcul courante, les sur-échantillons optimaux avec le préambule connu du paquet émis et
- des moyens de décision (CAL) pour détecter la présence et la position du paquet émis dans l'une des fenêtres de calcul en fonction du résultat des corrélations successives.

2. Récepteur selon la revendication 1, dans lequel la fenêtre de calcul contient un nombre de symboles supérieur à la taille du paquet émis, la différence, en nombre de symboles, étant prévue pour pallier une ambiguïté liée aux résultats des calculs de corrélation.

3. Récepteur selon la revendication 2, dans lequel la recherche de l'instant d'échantillonnage optimal est effectuée à partir de symboles reçus situés à la fin de la fenêtre courante, excepté les derniers symboles correspondant, en nombre, à ladite différence.

4. Récepteur selon la revendication 1, dans lequel les corrélations successives progressent d'au plus un symbole entre chaque corrélation.

5. Système de transmission par paquets de type TDMA comprenant au moins un émetteur (2) et un récepteur (1), l'émetteur étant susceptible d'émettre à destination du récepteur, un paquet de symboles, dit paquet émis, contenant une partie utile et un préambule connu dans des intervalles de temps alloués selon un plan d'allocation prédéterminé, le récepteur comportant :
- des moyens de réception (13) pour recevoir un paquet de symboles, dits symboles reçus, correspondant à l'intervalle de temps alloué,
- des moyens de sur-échantillonnage (18) pour générer des sur-échantillons (S₀ à S_{M-1}) à partir d'un symbole reçu et
- des moyens de récupération dudit paquet émis (22) pour retrouver la position du paquet émis dans l'intervalle de temps alloué, comprenant :
- des moyens de décalage (SELECT) pour sélectionner une fenêtre de calcul glissante sur l'intervalle de temps alloué,
- des moyens de recherche de l'instant d'échantillonnage optimal (CAL) pour déterminer, à partir des sur-échantillons générés, les sur-échantillons optimaux correspondant aux symboles reçus contenus dans la fenêtre de calcul courante,
- des moyens de corrélation (CAL) pour corréler successivement sur la fenêtre de calcul courante, les sur-échantillons optimaux avec le préambule connu du paquet émis et
- des moyens de décision (CAL) pour détecter la présence et la position du paquet émis dans l'une des fenêtres de calcul en fonction du résultat des corrélations successives.

6. Procédé de réception pour déterminer la position d'un paquet de symboles, dit paquet émis, comprenant des données utiles et un préambule connu, émis par un terminal d'un système de transmission par paquets de type TDMA, à l'intérieur d'un intervalle de temps alloué selon un plan d'allocation prédéterminé, le procédé comportant les étapes suivantes :
- une étape de réception (40) pour recevoir un paquet, dit paquet reçu, correspondant à l'intervalle de temps alloué et contenant des symboles, dits symboles reçus, dont le paquet émis,
- une étape de sur-échantillonnage (42) pour générer des sur-échantillons à partir desdits symboles reçus,
- une étape de décalage (45) pour sélectionner une fenêtre de calcul glissante sur le paquet reçu,
- une étape de recherche de l'instant d'échantillonnage optimal (46) pour sélectionner, à partir des sur-échantillons générés, les sur-échantillons optimaux correspondants aux symboles reçus contenus dans la fenêtre courante et
- une étape de corrélations successives (47) sur la fenêtre courante entre les sur-échantillons sélectionnés et le préambule connu du paquet émis et
- une étape de décision (48) pour détecter la présence du paquet émis dans une fenêtre de calcul et pour en déduire sa position à l'intérieur de l'intervalle de temps alloué.

7. Procédé selon la revendication 6, dans lequel l'étape de décision effectue une détection de seuil sur chaque résultat de corrélation pour en déduire la présence et la position du paquet émis.

8. Procédé selon la revendication 6, dans lequel l'étape de décision effectue un calcul de maximum entre tous les résultats des corrélations successives pour en déduire la présence et la position du paquet émis.

9. Programme d'ordinateur, pour un récepteur, comprenant des instructions qui, une fois chargée dans le récepteur, permettent de mettre en oeuvre le procédé selon la revendication 6.

10. Signal pour transporter un programme d'ordinateur, le programme comportant des instructions pour mettre en oeuvre le procédé selon la revendication 6.
